(19) Europäisches Patentamt
European Patent Office
Office européen des brevets

(11) **EP 1 783 459 B1**

(12) **EUROPÄISCHE PATENTSCHRIFT**

(45) Veröffentlichungstag und Bekanntmachung des Hinweises auf die Patenterteilung:
**18.10.2017   Patentblatt 2017/42**

(51) Int Cl.:
*G01D 3/032* (2006.01)          *B62D 15/02* (2006.01)

(21) Anmeldenummer: **06022913.5**

(22) Anmeldetag: **03.11.2006**

(54) **Vorrichtung und Verfahren zum Filtern eines differenziertem Messsignals eines elektromechanischen Lenksystems**

Method and device for filtering a differentiated measuring signal of an electromechanical steering system

Dispositif et procédé destinés au filtrage du signal de mesure différencié d'un système de guidage électromécanique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.11.2005   DE 102005053459**

(43) Veröffentlichungstag der Anmeldung:
**09.05.2007   Patentblatt 2007/19**

(73) Patentinhaber: **Volkswagen Aktiengesellschaft 38440 Wolfsburg (DE)**

(72) Erfinder: **Busse, Carsten 38444 Wolfsburg (DE)**

(74) Vertreter: **Patentanwälte Bressel und Partner mbB Potsdamer Platz 10 10785 Berlin (DE)**

(56) Entgegenhaltungen:
**DE-A1- 4 445 561          DE-A1- 10 209 610 DE-A1-102004 009 815**

## Beschreibung

Die Erfindung betrifft eine Vorrichtung zum Filtern eines differenzierten Messsignals eines elektromechanischen Lenksystems nach dem Oberbegriff des Patentanspruchs 1 und ein Verfahren zum Filtern eines differenzierten Messsignals eines elektromechanischen Lenksystems nach dem Oberbegriff des Patentanspruchs 11 sowie ein elektromechanisches Lenksystem.

Im Stand der Technik sind Lenksysteme für Kraftfahrzeuge bekannt, bei denen ein Lenk- oder Stellelement, beispielsweise ein Lenkrad, betätigt wird, um Fahrzeugräder zu lenken. Bei herkömmlichen Lenksystemen besteht zwischen dem Lenkelement und den gelenkten Fahrzeugrädern eine direkte mechanische Kopplung, das heißt mechanisch wirkende Kopplung. Um einen Kraftaufwand zum Lenken der Räder gering zu halten, weisen Lenksysteme teilweise Hydrauliksysteme auf, die eine Lenkwirkung unterstützen. Ebenso sind Systeme bekannt, bei denen das Lenken der Fahrzeugräder durch Elektromotoren unterstützt wird. Um solche Systeme betreiben zu können, wird mittels eines Sensors die Position des Lenkelements erfasst Dieses Messsignal wird verwendet, um den Elektromotor bzw. ein Steuerelement eines Hydrauliksystems anzusteuern. Neben der Position des Lenkelements werden auch mittels Differentiation abgeleitete Größen, beispielsweise eine Lenkgeschwindigkeit bzw. eine Lenkbeschleunigung, zum Ansteuern des elektrischen Antriebs des Lenksystems bzw. des Steuerelements des Hydrauliksystems verwendet.

Bei modernen Lenksystemen wird auf eine mechanische Kopplung des Lenkelements mit einer Lenkmechanik, die die lenkbaren Räder betätigt, verzichtet Solche Lenksysteme werden als "steer-by-wire"-Lenksysteme bezeichnet, da die Lenkinformation lediglich über einen Draht in Form von Signalen oder gegebenenfalls über eine Faser in Form von optischen Signalen übertragen wird.

Um dem Fahrer ein Lenkgefühl zu vermitteln, wie er es von Lenksystemen mit einer mechanischen Kopplung zwischen dem Lenkelement und den lenkbaren Rädern kennt, sind ein oder mehrere Betätigungselemente vorgesehen, die auf das Lenkelement einwirken und einen mechanischen Lenkwiderstand erzeugen, eine Rückstellung des Lenkrads bewirken usw.

Sowohl für das Betätigen der Lenkmechanik als auch für das Bereitstellen einer Lenkfunktionalität, die eine aktive Lenkradrückstellung, eine aktive Dämpfung, eine aktive Trägheitskompensation und weitere Lenkfunktionen umfasst, müssen neben dem Messsignal, welches die Position des Lenkelements angibt, auch die hieraus mittels Differentiation abgeleiteten Messgrößen, wie die Lenkgeschwindigkeit (Differentiation erster Ordnung) und die Lenkbeschleunigung (Differentiation zweiter Ordnung), berücksichtigt und verarbeitet werden. Die so gewandelten bzw. differenzierten Messsignale weisen in der Regel eine unerwünschte Rauschamplitude auf. Sowohl bei Lenksystemen mit einer mechanisch wirkenden Kopplung des Lenkelements mit der Lenkmechanik, d. h. mit den lenkbaren Rädern, als auch bei Steer-by-wire-Lenksystemen bewirken hohe Rauschamplituden eine starke mechanische Belastung der Lenkmechanik und beeinflussen ein haptisches Verhalten des Lenkelements oder eine haptische Wahrnehmung an dem Lenkelement negativ. Neben der hohen mechanischen Belastung kann es durch große Rauschamplituden auch zu einer Geräuschbildung kommen. Daher ist es wünschenswert, das differenzierte Signal über eine Filterung zu glätten.

Mit einer Glättung, d.h. einer Filterung, eines Messsignals ist immer eine zeitliche Verzögerung des Messsignals verbunden. Dieses ist darauf zurückführbar, dass das Messsignal beim Glätten über einen Zeitraum gemittelt wird. Diese zeitliche Verzögerung ist umso größer, je stärker das Messsignal gefiltert ist, d.h. je besser das Messsignal geglättet ist. In einem Bereich, in dem sich das differenzierte Messsignal nicht oder nur wenig ändert, einem so genannten statischen Bereich, kann eine hohe Zeitverzögerung toleriert werden. In einem Bereich, in dem sich das differenzierte Messsignal stark pro Zeiteinheit verändert, einem dynamischen Bereich, kann eine zeitliche Verzögerung nicht toleriert werden, da ansonsten ein sicheres Lenkverhalten des Kraftfahrzeugs nicht gewährleistet werden kann. Bei den bekannten Lenksystemen wird daher bei der Filterung differenzierter Messsignale von Lenksystemen eine Zeitkonstante, die mit der Mittelung des Messsignals verknüpft ist, für den Filter gewählt, die zu einer gerade noch akzeptablen zeitlichen Verzögerung von dynamischen Änderungen des differenzierten Messsignals führt. Durch diese Wahl wird die maximal erreichbare Glättung begrenzt. Bekannte Lenksysteme sind daher einer relativ starken Belastung ausgesetzt, die auf hochfrequente Rauschamplituden, die aufgrund eines Differenzierens des Messsignals in das differenzierte Messsignal "eingefügt" wurden, zurückführbar sind. Dies beeinträchtigt sowohl das Fahrverhalten eines entsprechenden Kraftfahrzeugs als auch das haptische Verhalten des Lenkelements und eine haptische Wahrnehmung eines Nutzers eines solchen Kraftfahrzeugs negativ.

Die DE 10 2004 009 815 A1 beschreibt ein Lenksystem eines Kraftfahrzeuges, mit einer Lenkhandhabe zur Vorgabe eines Lenkradwinkels als Maß für einen gewünschten Lenkwinkel für mindestens ein lenkbares Rad des Kraftfahrzeugs. Das Lenksystem umfasst außerdem Überlagerungsmittel zum Generieren eines Zusatzwinkels und zur Überlagerung des Lenkradwinkels mit dem Zusatzwinkel. Ein Ritzelwinkel ergibt sich aus der Summe des Lenkradwinkels und des Zusatzwinkels. Schließlich umfasst das Lenksystem ein Lenkgetriebe zur Umsetzung des Ritzelwinkels in einen korrigierten Lenkwinkei für das mindestens eine lenkbare Rad des Kraftfahrzeugs. Um die Handhabbarkeit von Kraftfahrzeugen, die mit derartigen Lenksystemen ausgestattet sind, weiter zu verbessern, wird vorgeschlagen, dass die Überlagerungsmittel den Zusatzwinkel in Abhängigkeit von einer Fahrsituation des Kraftfahrzeugs, ausgenommen von der Fahrgeschwindigkeit des Kraftfahrzeugs, generieren.

Die DE 102 09 610 A1 beschreibt eine Steuer- oder Regelvorrichtung, die in einem Kraftverstärker verwendet wird, um einen Kraftsteller zu steuern oder zu regeln, der manuell aufgebrachte Kräfte bzw. Momente verstärkt, wobei eine adaptive Regelstrategie eingesetzt wird, mit der die Stabilität des Gesamtsystems über ein adaptives Verhalten des Gesamtsystems erreicht wird.

Die DE 44 45 561 A1 beschreibt eine elektrisch betätigte Servolenkvorrichtung zum Anlegen einer Hilfslenkkraft an ein Lenksystem, die einen Elektromotor zum Erzeugen einer an das Lenksystem anzulegenden Hilfslenkkraft, einen Lenkdrehmomentsensor zum Erzeugen eines ein Lenkdrehmoment des Lenksystems bezeichnenden Lenkdrehmomentsignals und einen Motordrehzahlsensor zum Erzeugen eines eine Drehzahl des Elektromotors bezeichnenden Motordrehzahlsignals umfasst. Eine Steuereinrichtung erzeugt ein Differentialsignal des Lenkdrehmomentsignals, berechnet eine Lenkdrehzahl des Lenksystems auf Basis des Differentialsignals und des Motordrehzahlsignals und steuert den Elektromotor auf Basis des Lenkmomentdrehmomentsignals und der Lenkdrehzahl. Ferner kann das Drehzahlsignal auf Basis eines einen Motorstroms des Elektromotors bezeichneten Motorstromsignals und eine Motorspannung des Elektromotors bezeichneten Motorspannungssignals berechnet werden.

Der Erfindung liegt die technische Aufgabe zugrunde, eine Vorrichtung und ein Verfahren zum Filtern eines differenzierten Messsignals zu schaffen, die ein gefiltertes Messsignal erzeugen, mit dem ein verbessertes Fahrverhalten und haptisches Verhalten in einem Fahrzustand, in dem sich das differenzierte Messsignal nicht oder nur unwesentlich ändert, erreichbar ist, ohne dass eine Beeinträchtigung einer Lenkreaktion bei einer starken Änderung des differenzierten Messsignals pro Zeiteinheit verursacht wird.

Die Aufgabe wird erfindungsgemäß durch eine Vorrichtung mit den Merkmalen des Patentanspruchs 1 sowie ein Verfahren mit den Merkmalen des Patentanspruchs 11 gelöst. Vorteilhafte Ausgestaltungen der Erfindung ergeben sich aus den Unteransprüchen.

Erfindungsgemäß ist vorgesehen, das Glättungsfilter, mit dem das differenzierte Messsignal geglättet wird, als adaptives Filter auszubilden. Mittels einer Steuereinrichtung ist eine Zeitkonstante des Glättungsfilters adaptiv an eine Dynamik des differenzierten Messsignals anpassbar. Insbesondere wird eine Vorrichtung zum Filtern eines differenzierten Messsignals, insbesondere eines differenzierten Messsignals eines Lenkelements, insbesondere eines Lenkrads, eines elektromechanischen Lenksystems, vorgeschlagen, umfassend ein Glättungsfilter zum Filtern des differenzierten Messsignals, wobei das Glättungsfilter ein adaptives Filter ist und mittels einer Steuereinrichtung eine Zeitkonstante des Glättungsflters adaptiv an eine Dynamik des differenzierten Messsignals anpassbar ist. Femer wird ein Verfahren zum Filtem eines differenzierten Messsignals, insbesondere eines differenzierten Messsignals eines Lenkelements, insbesondere eines Lenkrads, eines elektromechanischen Lenksystems, umfassend einen Schritt eines Glättens des differenzierten Messsignals mittels eines Glättungsfilters, vorgeschlagen, wobei mittels einer Steuereinrichtung eine Zeitkonstante des Glättungsfitters adaptiv an eine Dynamik des differenzierten Messsignals angepasst wird. Unter dem Begriff Glätten wird ein Reduzieren einer Rauschamplitude verstanden, die in dem differenzierten Messsignel enthalten ist Dies bedeutet, dass hochfrequente Signalanteile, die in der Regel ein Rauschen darstellen, aus dem differenzierten Messsignal entfernt werden. Eine dynamische Anpassung der Zeitkonstante des Glättungsfilters führt dazu, dass in einem Bereich, in dem das differenzierte Messsignal sich nicht verändert, d.h. statisch ist, eine große Zeitkonstante gewählt werden kann. Hierdurch wird eine starke Glättung des Signals erreicht. Bei einer Geradeausfahrt, bei der das Lenkelement nicht betätigt wird und somit das Messsignal der Position konstant ist und somit auch die differenzierten Messsignale einen konstanten Wert aufweisen, wird ein unveränderliches differenziertes Messsignal erhalten. Hochfrequenzanteile, die als Rauschen bei einer Differentiation in die differenzierten Messsignale eingefügt wurden, werden so wirkungsvoll aus dem differenzierten Messsignal eliminiert. Hierdurch wird erreicht, dass die Stellsignale für das mechanische Lenksystem, mit dem die lenkbaren Räder des Fahrzeugs betätigt werden, keine hochfrequenten Stellbewegungen erzeugen, die zu der hohen Belastung des Lenksystems und gegebenenfalls zu einer Geräuschbelästigung führen. Ebenso werden gegebenenfalls solche hochfrequenten Stellbewegungen von Stellgliedem, die das Lenkelement betätigen, um die Haptik zu beeinflussen, vermindert oder sogar vermieden. Es treten somit weniger oder keine hochfrequenten Bewegungen des Lenkelements auf, die auf das durch das Differenzieren des Messsignals "eingefügte" Rauschen zurückzuführen sind.

Eine besonders vorteilhafte Ausführungsform der Erfindung sieht vor, dass das Glättungsfilter ein Tiefpassfilter ist. Hierdurch werden die besonders nachteiligen hochfrequenten Anteile des Rauschens, die bei einer Differentiation des Messsignals in das differenzierte Messsignal eingefügt wurden, zuverlässig auf einfache Weise entfernt.

Um die Zeitkonstante des Glättungsfilters an die Dynamik des differenzierten Messsignals anzupassen, ist bei einer bevorzugten Weiterbildung der Erfindung vorgesehen, dass mittels der Steuereinrichtung ein Differenzsignal aus dem differenzierten Masssignal und einem aus dem differenzierten Messsignal abgeleiteten Messsignal, das zumindest eine zeitliche Verzögerung gegenüber dem differenzierten Messsignal aufweist, bestimmbar ist, wobei das Differenzsignal ein Maß für die Zeitkonstante angibt. Durch die Differenzbildung des differenzierten Messsignals und dem mittels einer zeitlichen Verzögerung abgeleiteten differenzierten Messsignal kann auf einfache Weise die Dynamik des differenzierten Messsignals bestimmt werden. Ist die Differenz groß, so ist die Änderung pro Zeiteinheit des differenzierten Messsignals groß. Dies bedeutet, dass sich das differenzierte Messsignal in einem dynamischen Bereich befindet. Ist hingegen die Differenz zwischen dem differenzierten Messsignal und dem hieraus mittels zeitlicher Verzögerung abgeleiteten Messsignal klein oder liegt die Differenz im Größenordnungsbereich der Rauschamplitude des differenzierten Messsignals, so befindet sich das differenzierte Messsignal im statischen Bereich. Befindet sich das differenzierte Messsignal im dynamischen Bereich (große Differenz), so ist die Zeitkonstante des Glättungsfilters klein zu wählen, so dass Änderungen des differenzierten Messsignals ohne große zeitliche Verzögerung in die Steuerung und Regelung des Lenksystems eingebracht werden können. Ist hingegen die Differenz klein, so befindet sich das differenzierte Messsignals im statischen Bereich, so dass für die Filterung eine möglichst große Zeitkonstante zu wählen ist, so dass eine besonders gute Glättung des differenzierten Messsignals mittels der Vorrichtung zum Filtern erreicht wird. Das Differenzsignal ist somit ein Maß für die zu wählende Zeitkonstante des adaptiven Filters.

Bei einer bevorzugten Ausführungsform der Erfindung ist vorgesehen, dass die zeitliche Verzögerung mittels eines $PT_1$-Glieds erzeugt wird. Daher ist bei einer bevorzugten Weiterbildung der Erfindung vorgesehen, dass die Steuereinrichtung ein $PT_1$-Glied zum Erzeugen des abgeleiteten Messsignals umfasst. Zum einen bewirkt ein $PT_1$-Glied eine zeitliche Verzögerung des differenzierten Messsignals. Zum anderen bewirkt das $PT_1$-Glied gleichzeitig eine Glättung des zeitlich verzögerten, abgeleiteten Messsignals. Hierdurch wird eine Reduktion des Rauschens des bei der Differenzbildung erzeugten Differenzsignals erreicht.

Um sicherzustellen, dass die mittels der Steuereinrichtung bestimmte Zeitkonstante immer einen positiven Wert aufweist, ist bei einer vorteilhaften Weiterbildung der Erfindung vorgesehen, dass die Steuereinrichtung eine Betragsbildungseinheit zum Bilden eines Absolutwertsignals aus dem Differenzsignal umfasst, wobei das Absolutsignal ein Maß für die Zeitkonstante ist.

Es ist wünschenswert, dass das differenzierte Messsignal im dynamischen Bereich einer Mindestglättung unterzogen wird und im statischen Bereich eine zeitliche Verzögerung, die durch die Glättung bewirkt wird, begrenzt ist. Eine vorteilhafte Weiterbildung der Erfindung sieht daher vor, dass die Steuereinrichtung eine Begrenzungseinheit zum Überwachen, dass ein Wert der von der Steuereinrichtung bestimmten Zeitkonstante $T_{optimal}$ zwischen einem Minimalwert der Zeitkonstante $T_{minimal}$ und einem Maximalwert der Zeitkonstante $T_{maximal}$ liegt, und gegebenenfalls zum Setzen des Wertes der bestimmten Zeitkonstante $T_{optimal}$ bei einem Unterschreiten des Minimalwerts $T_{minimal}$ auf den Minimalwert $T_{minimal}$ und bei einem Überschreiten des Maximalwerts $T_{maximal}$ auf den Maximalwert $T_{maximal}$ der Zeitkonstante umfasst Ein Wert der bestimmten Zeitkonstante wird somit eingeschränkt, sodass der Wert der bestimmten Zeitkonstante $T_{optimal}$ zwischen einem Minimalwert der Zeitkonstante $T_{minimal}$ und einem Maximalwert der Zeitkonstante $T_{maximal}$ liegt Falls erfordertich, wird der Wert der Zeitkonstante $T_{optimal}$ gegebenenfalls bei einem Unterschreiten des Minimalwerts $T_{minimal}$ auf den Minimalwert $T_{minimal}$ und bei einem Überschreiten des Maximalwerts $T_{maximal}$ auf den Maximalwert $T_{maximal}$ der Zeitkonstante gesetzt

Um das von der Steuereinrichtung erzeugte Signal weiter verarbeiten zu können, ist es von Vorteil, wenn dieses skalierbar ist. Daher umfasst bei einer vorteilhaften Ausführungsform der Erfindung die Steuereinrichtung einen Verstärker, mit dem das Differenzsignal, das Absolutwertsignal oder das begrenzte Differenzsignal oder das begrenzte Absotutwertsignal verstärkbar sind.

Eine besonders vorteilhafte Ausführungsform der Erfindung erhält man, wenn ein Wert einer $PT_1$-Glied-Zeitkonstante $T_{PT1-Glied}$ des $PT_1$-Glieds dem Maximalwert der Zeitkonstante $T_{maximal}$ des Glättungsfilters entspricht. Mit dem Maximalwert der Zeitkonstant $T_{maximal}$ ist eine so genannte untere Grenzfrequenz $f_u = 1/T_{maximal}$ verknüpft. Wird die $PT_1$-Glied-Zeitkonstante des $PT_1$-Glieds gleich dem Maximalwert der Zeitkonstante $T_{maximal}$ gewählt, so werden nur Frequenzen oberhalb der Frequenz $f_u$ bei der Verzögerung aus dem abgeleiteten Signal herausgefiltert. Änderungen mit einer geringeren Frequenz gehen in die Differenzbildung ein und bewirken so eine Anpassung der bestimmten Zeitkonstante $T_{optimal}$·

Eine besonders bevorzugte Ausführungsform erhält man, wenn das Glättungsfilter eine weitere Differenzbildungseinheit, eine Produktbildungseinheit und eine Integriereinheit umfasst, die gemeinsam ein Tiefpass erster Ordnung bilden, wobei von der Steuereinrichtung die Zeitkonstante in Form eines erzeugten Stellsignals lieferbar ist, das den Kehrwert der Zeitkonstante repräsentiert, und das erzeugte Stellsignal mit dem differenzierten Messsignal mittels der Produktbildungseinheit multiplizierbar und anschließend mit der Integriereinheit integrierbar ist, um ein gefiltertes differenziertes Messsignal zu liefern, wobei das gefilterte differenzierte Messsignal so zurückkoppelbar ist, dass es mittels der weiteren Differenzbildungseinheit von dem differenzierten Messsignal vor der Produktbildung mit dem Stellsignal subtrahierbar ist.

Insbesondere wird durch die Erfindung ein elektromechanisches Lenksystem für ein Kraftfahrzeug, umfassend eine hier beschriebene erfindungsgemäße Vorrichtung zum Filtern, geschaffen, wobei ein Messsignal einer physikalischen Messgröße, insbesondere eine Position, eines Lenkelements erfassbar ist, dessen Differentiation das differenzierte Messsignal liefert, wobei das gefilterte differenzierte Messsignal bei einer Steuerung einer Lenkmechanik des Kraftfahrzeugs verwendbar ist. Eine besonders bevorzugte Ausführungsform des elektromechanischen Lenksystems sieht vor, dass die Lenkmechanik mit dem Lenkelement nicht mechanisch wirkend gekoppelt ist. Die so geschaffenen elektromechanischen Lenksysteme weisen gegenüber den bekannten Lenksystemen verbesserte haptische Eigenschaften und Lenkeigenschaften auf, wobei insbesondere eine aufgrund einer bei der Differentiation des Messsignals eingefügten Rauschamplitude bewirkte hochfrequente mechanische Belastung des Lenksystems und/oder des Lenkelements verringert wird und hierdurch gegebenenfalls zusätzlich eine Geräuschbelastung vermieden oder verringert wird.

Die Merkmale des erfindungsgemäßen Verfahrens weisen dieselben Vorteile wie die entsprechenden Merkmale der erfindungsgemäßen Vorrichtung auf.

Nachfolgend wird die Erfindung anhand eines bevorzugten Ausführungsbeispiels unter Bezugnahme auf eine Zeichnung näher erläutert. Hierbei zeigen:

Fig. 1 eine schematische Darstellung einer Ausführungsform eines Fahrzeugs mit einem elektromechanischen Lenksystem;

Fig. 2a einen Graphen eines ungefilterten differenzierten Messsignals:

Fig. 2b einen Graphen eines schwach gefilterten differenzierten Messsignals, das man bei einer Filterung des differenzierten Messsignals nach Fig. 2a mit einem Tiefpass erster Ordnung mit einer kleinen Zeitkonstante erhält;

Fig. 2c einen Graphen eines stark gefilterten differenzierten Messsignals, das man bei einer Filterung des differenzierten Messsignals nach Fig. 2a mit einem Tiefpass erster Ordnung mit einer große Zeitkonstante erhält; und

Fg. 3 ein schematisches Blockschaltbild einer Vorrichtung zum Filtern eines differenzierten Messsignals.

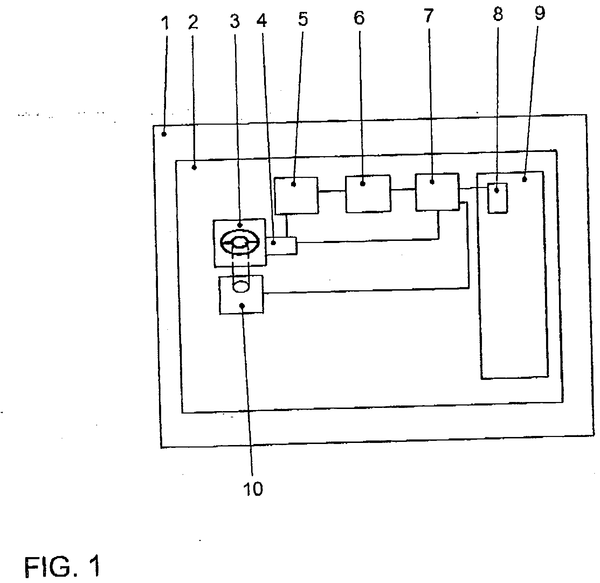

Fig. 1 zeigt eine schematische Darstellung einer Ausführungsform eines Fahrzeugs 1. Das Fahrzeug 1 umfasst ein elektromechanisches Lenksystem 2. Das elektromechanische Lenksystem 2 umfasst ein Lenkelement 3, das vorzugsweise als Lenkrad ausgebildet ist Eine Stellung des Lenkelements 3 wird mittels eines Sensors 4 erfasst. Das von dem Sensor 4 erfasste Messsignals wird mittels eines Differenzierers 5 differenziert. Das differenzierte Messsignal wird mittels einer Vorrichtung zum Filtern 6 gefiltert, insbesondere geglättet. Das gefilterte differenzierte Messsignal wird von einer Steuer- und Regeleinheit 7 gemeinsam mit dem Messsignal des Sensors 4 ausgewertet und verarbeitet. Die Steuer- und Regelvorrichtung 7 erzeugt Stellsignale, mit denen eine (oder mehrere) elektrisch betriebene Wirkeinrichtung 8 einer Lenkmechanik 9 sowie ein Stellglied 10 ansteuerbar sind. Die elektrisch betriebene Wirkeinrichtung 8 ist beispielsweise als Elektromotor ausgebildet. Die Lenkmechanik 9 ist mit lenkbaren Rädern (nicht dargestellt) des Fahrzeugs 1 mechanisch gekoppelt. Ober das Stellglied 10 kann das Lenkelement 3 betätigt werden. Hierdurch werden Lenkfunktionalitäten wie eine aktive Lenkrückstellung des Lenkelements, das vorzugsweise als Lenkrad ausgebildet ist, eine aktive Dämpfung und Trägheitskompensation und weitere Lenkfunktionen insbesondere bei einem als "steer-by-wire"-Lenksystem ausgebildetem Lenksystem 2 realisiert.

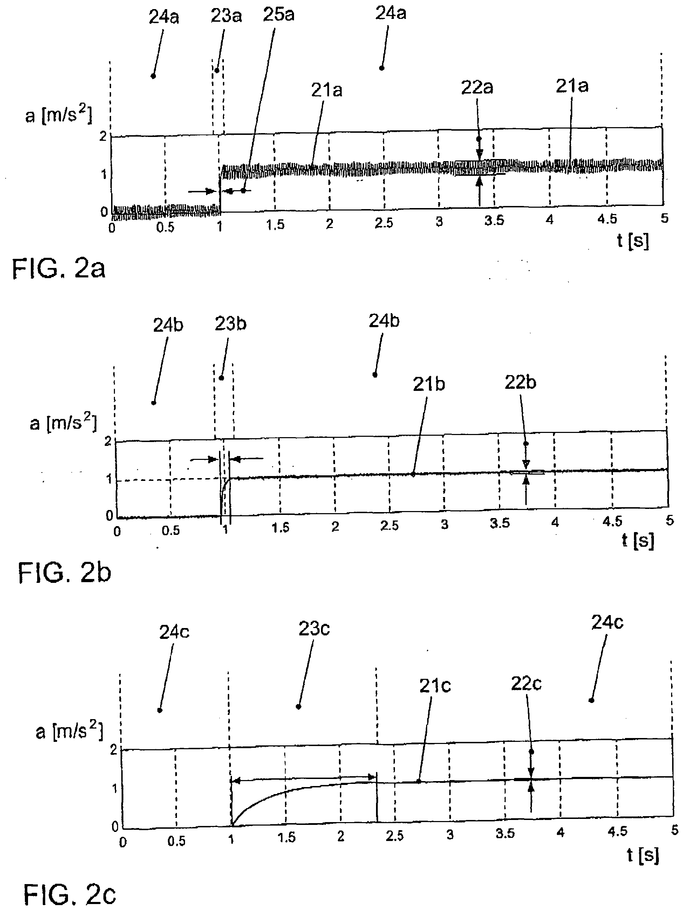

In Fig. 2a ist ein differenziertes Messsignal 21a gegen die Zeit graphisch aufgetragen. Eine Amplitude des differenzierten Messsignals 21a repräsentiert eine Beschleunigung eines Lenkelements, beispielsweise eine Winkelbeschleunigung des Lenkelements 3 nach Fig. 1. Ein die Beschleunigung repräsentierendes differenziertes Messsignal erhält man durch zweifache Differentiation nach der Zeit eines Orts-, Positions- oder Stellungssignals. Bei einem als Lenkrad ausgebildeten Lenkelement ergibt sich beispielsweise die Winkelbeschleunigung durch zweifache Differentiation des Winkels, der die Stellung des Lenkelements in Abhängigkeit von der Zeit beschreibt. Das differenzierte Messsignal 21a kann jedes beliebige Signal sein, welches mittels Differentiation nach der Zeit aus einem gemessenen Signal erzeugt ist. Bei dem in Fig. 2a dargestellten ungeflterten differenzierten Messsignal 21a ist zu erkennen, dass durch die Differentiation ein Rauschen in das differenzierte Messsignal 21a eingefügt wurde. Ziel einer Filterung ist es, dieses Rauschen möglichst aus dem differenzierten Messsignal 21a zu entfernen, d.h. ein geglättetes differenziertes Messsignal zu erzeugen.

Das ungefilterte differenzierte Messsignal 21a lässt sich in zwei Bereiche einteilen, die von einer Dynamik des differenzierten Messsignals 21a ableitbar sind. Zeitbereich, in denen sich die Amplitude des differenzierten Messsignals 21a relativ zu einer Rauschamplitude 22a deutlich verändert, werden als dynamische Bereiche 23a bezeichnet. Zeitbereiche, in denen sich die Amplitude des differenzierten Messsignals 21a lediglich in einer Größenordnung der Raüschamplitude 22 verändert, werden als statische Bereiche 24a bezeichnet. Wie in Fig. 2a dargestellt ist, steigt die Amplitude des differenzierten Messsignals 21a in dem dynamischen Bereich 23a innerhalb einer Anstiegszeit, welche durch Pfeile 25a eingegrenzt ist.

In Fig. 2b ist ein schwach gefiltertes differenziertes Messsignal 21b dargestellt, das mittels einer Filterung des differenzierten Messsignals 21a nach Fig. 2a mit einem Tiefpasses erster Ordnung in Form eines $PT_1$-Glieds mit einer Zeitkonstante $T_{PT1-Glied} = 0,01$ s erzeugt ist. Das gefilterte differenzierte Messsignal 21b weist eine sehr viel geringere Rauschamplitude 22b auf. Zugleich ist jedoch die Anstiegszeit, die mittels Pfeilen 25b eingegrenzt, des gefilterten differenzierten Messsignals 21b deutlich angestiegen. Ein dynamischer Bereich 23b, der mit dem dynamischen Bereich 23a korrespondiert, ist zeitlich ausgedehnter. Statische Bereiche 24b sind hingegen unverändert oder entsprechend zeitlich verkürzt.

In Fig. 2c ist ein stark gefiltertes differenzierte Messsignal 21c dargestellt das mittels einer Filterung des differenzierten Messsignals 21a nach Fig. 2a mit einem Tiefpass erster Ordnung mit einem $PT_1$-Glied mit einer Zeitkonstante $T_{PT1\text{-}Glied} = 0,33$ s erzeugt ist. Bei dem gefilterten differenzierten Messsignal 21c ist eine Rauschamplitude 22c noch einmal deutlich gegenüber der Rauschamplitude 22b des schwach gefilterten differenzierten Messsignals 21b reduziert. Jedoch ist zugleich die Anstiegszeit, die mittels eines Pfeils 25c dargestellt ist, sehr stark angestiegen. Dementsprechend ist ein dynamischer Bereich 23c zeitlich verlängert und sind entsprechend statische Bereiche 24c verkürzt. Große Anstiegszeiten sind jedoch für eine Weiterverarbeitung der gefilterten differenzierten Messsignals 21b, 21c nicht akzeptabel, da mittels dieser gefilterten differenzierten Messsignale 21b, 21c eine Lenkung eines Kraftfahrzeugs gesteuert werden soll, die im Straßenverkehr in Bruchteilen von Sekunden Lenkbewegungen von dem Lenkelement 3 nach Fig. 1 in Lenkbewegungen des elektromechanischen Lenksystems, d.h. Lenkbewegungen der Fahrzeugräder, übertragen muss.

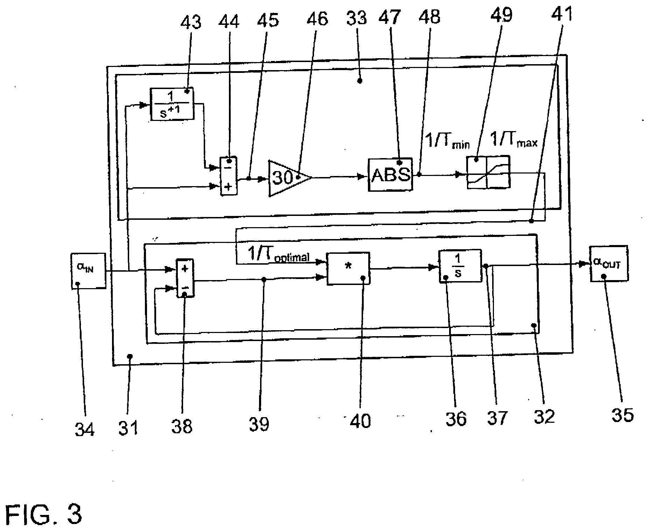

Vorteilhafterweise sieht daher eine Ausführungsform einer Vorrichtung zum Filtern vor, dass die Vorrichtung einen Glättungsfilter umfasst, dessen Zeitkonstante $T_{optimal}$ adaptiv an die Dynamik des differenzierten Messsignals 21a nach Fig. 2a anpassbar ist. In Fig. 3 ist ein schematisches Blockdiagramm einer solchen Vorrichtung 31 zum Filtern dargestellt. Die Vorrichtung 31 zum Filtern umfasst einen Glättungsfilter 32 sowie eine Steuereinrichtung 33 zum Bestimmen einer Zeitkonstante $T_{optimal}$ des Glättungsfilters 32 in Abhängigkeit von einer Dynamik eines ungefilterten differenzierten Messsignals 34. Das ungefilterte differenziertes Messsignal 34 wird mittels der Vorrichtung 31 zum Filtern in ein gefiltertes differenziertes Messsignal 35 überführt, das in einem statischen Bereich des ungefilterten differenzierten Messsignals 34 stark geglättet ist und zugleich kurze Anstiegszeiten in einem dynamischen Bereich des ungefilterten differenzierten Messsignals 34 aufweist, Im dynamischen Bereich kann somit beispielsweise eine Änderung der Beschleunigung schnell erfasst werden, um Anregelzeiten klein zu halten. Im statischen Bereich wird hingegen ein fehlerfreies Beschleunigungssignal erreicht, um die erforderliche Genauigkeit bei der Generierung von Lenkfunktionen zu gewährleisten.

Der Glättungsfilter 32 umfasst eine Integriereinheit 36, deren Ausgangssignal 37 zum einen das gefilterte differenzierte Messsignal 35 liefert und andererseits über eine weitere Differenzbildungseinheit 38 zurückgekoppelt wird. In der weiteren Differenzbildungseinheit 38 wird das zurückgekoppelte Ausgangssignal 37 von dem ungefilterten differenzierten Messsignal 34 subtrahiert. Ein so erhaltenes Ergebnissignat 39 wird mittels einer Produktbildurigseinheit 40 mit einem Stellsignal 41 zu einem Produktsignal 42 verarbeitete, welches wiederum in die Integriereinheit 36 eingegeben wird. Das 41 repräsentiert den Kehrwert einer Zeitkonstante $T_{optimal}$ des Glättungsfüters 32.

Das 41 wird mittels der Steuereinrichtung 43 adaptiv angepasst an die Dynamik des ungefilterten differenzierten Messsignals 34 bestimmt. Hierzu wird das ungefilterte differenzierte Messsignal 34 zunächst mittels einer Verzögerungseinheit 43 verzögert und anschließend mittels einer Differenzbildungseinheit 44 von dem ungefilterten differenzierten Messsignal 34 subtrahiert. Die Verzögerungseinheit 43 ist vorzugsweise als $PT_1$-Glied ausgebildet. Die Verzögerungseinheit 43 kann auch eine andere Schaltung umfassen, jedoch weist die Ausbildung als $PT_1$-Glied den Vorteil auf, dass das verzögerte differenzierte Messsignal bereits geglättet ist, so dass eine Rauschamplitude des Differenzsignals 45 bei der Differenzbildung in der Differenzbildungseinheit 44 durch die Rauschamplitude des ungefilterten differenzierten Messsignals 34 weniger stark beeinflusst ist als bei einer Verzögerungseinheit, in der das verzögerte differenzierte Messsignal nicht zugleich geglättet wird.

Das von der Differenzbildungseinheit 44 gebildete Differenzsignal 45 stellt ein Maß für die Dynamik des ungefilterten differenzierten Messsignals 34 dar. Ist die Differenz groß, so befindet sich das ungefilterte differenzierte Messsignal 34 in einem dynamischen Bereich, ist hingegen die Differenz klein, so befindet sich das ungefilterte differenzierte Messsignal 34 in einem statischen Bereich. Das Differenzsignal 45 kann somit auch als Maß für die zu bestimmende Zeitkonstante $T_{optimal}$ des Glättungsfilters 32 verwendet werden. Ist die Differenz groß, so muss die Zeitkonstante $T_{optimal}$ zur Filterung klein gewählt werden, ist die Differenz klein, so muss die Zeitkonstante $T_{optimal}$ groß gewählt werden, um eine starke Glättung des gefilterten differenzierten Messsignals 35 zu erhalten. Eine Amplitude des Differenzsignals 45 ist somit proportional zu einem Kehrwert der zu bestimmenden Zeitkonstante $T_{optimal}$.

Das Differenzsignal wird mittels eines Verstärkers 46 verstärkt, so dass die Amplitude des Differenzsignals 45 möglichst direkt einen Kehrwert der zu bestimmenden Zeitkonstante $T_{optimal}$ angibt.

Um sicher zu stellen, dass das Differenzsignal immer ein positives Vorzeichen aufweist, wird das Signal auf eine Betragsbildungseinheit 47 geleitet, die ein Absolutwertsignal 48 erzeugt.

Da es sinnvoll ist, im dynamischen Bereich eine minimale Glättung zu fordern, d.h. eine untere Schwelle für die Zeitkonstante $T_{optimal}$ des Glättungsfilters 32 festzulegen, und zugleich eine maximale Glättung im statischen Bereich zu fordern, d.h. einen oberen Schwellenwert für die Zeitkonstante $T_{optimal}$ des Glättungsfilters 32 festzulegen, wird das Absotutwertsignaf auf eine Begrenzungseinheit 49 geführt, an deren Ausgang das Stellsignal 41 anliegt. Die Begrenzungseinheit 49 überwacht, dass der bestimmte Wert der Zeitkonstante $T_{optimal}$ zwischen dem Minimalwert der Zeltkonstante $T_{minimal}$ und einem Maximalwert der Zeitkonstante $T_{maximal}$ liegt. Unterschreitet der von dem Absolutwertsignal 48 repräsentierte Wert der Zeitkonstante $T_{optimal}$ die minimale Zeitkonstante $T_{minimal}$, so wird das so ausgegeben, dass es die minimale Zeitkonstante $T_{minimal}$ repräsentiert. Im entgegengesetzten Fall, bei dem die von dem Absolutwertsignal 48 repräsentierte Zeitkonstante $T_{optimal}$ den Wert der maximalen Zeitkonstante $T_{maximal}$ überschreitet, wird das Stellsignal 41 so ausgegeben, dass der von dem Stellsignal 41 repräsentierte Wert der Zeitkonstante $T_{optimal}$ dem Maximalwert der Zeitkonstante $T_{maximal}$ entspricht. Über die Wahl der minimalen Zeitkonstante $T_{minimal}$ und der maximalen Zeitkonstante $T_{maximal}$ werden obere und untere Filterfrequenzen festgelegt. Die obere Filterfrequenz for = $1/T_{minimal}$ beschreibt die Filterung im dynamischen Bereich des differenzierten Messsignals 34. Die obere Frequenz bzw. die minimale Zeitkonstante $T_{minimal}$ bestimmt die Anstiegsgeschwindigkeit des gefilterten differenzierten Messsignals 35. $T_{minimal}$ legt die minimale Zeit fest, innerhalb der eine Amplitude des gefilterten differenzierten Messsignal 35 bei einem Sprung einer Amplitude des ungefiterten differenzierten Messsignals 34 63 % ihres Endwertes erreicht hat. Die untere Filterfrequenz $f_u = 1/T_{maximal}$ beschreibt die Filterung im statischen Bereich des ungefilterten differenzierten Messsignals 34 und ist für die Glätte des gefilterten differenzierten Messsignals 35 im statischen Bereich verantwortlich. Die Festlegung der Zeitkonstanten $T_{maximal}$ und $T_{minimal}$ bzw. der Filterfrequenzen $f_O$ und $f_U$ ist an die geforderten Anregelzeiten und Genauigkeiten der Lenkfunktionsgenerierungen anzupassen.

Eine-Amplitude des Stellsignals 41, die ein Maß für die zu bestimmende Zeitkonstante $T_{optimal}$ ist, genauer gleich dem Kehrwert der Zeitzeitkonstante $T_{optimal}$ ist, wird wesentlichen durch eine Verstärkung des Verstärkers 46 beeinflusst. Der Verstärkungsfaktor wird umgekehrt proportional zur Rauschamplitude des ungefilterten differenzierten Messsignals 34 gewählt. Die Grundverstärkung V des Verstärkers 46 wird vorzugsweise aus der Rauschamplitude $R_{Amplitude}$ des ungefilterten differenzierten Messsignals 34 und der unteren Filterfrequerlz $f_u = 1/T_{maximal}$ nach folgender Formel berechnet:

$$V = f_U/R_{Amplitude} = 1/(T_{maximal} \cdot R_{Amplitude}). \tag{Gl. 1}$$

Eine Nachoptimierung oder Feineinstellung der Vorrichtung zum Filtern 31 bezüglich einer Anstiegsgeschwindigkeit des gefilterten differenzierten Messsignals 35 kann durch eine Erhöhung der Verstärkung erreicht werden. Bei einer Erhöhung der Verstärkung V tritt eine Erhöhung der Signalanstiegsgeschwindigkeit ein, jedoch steigt auch die Rauschamplitude des gefilterten differenzierten Messsignals 35.

Bei der beschriebenen Ausführungsform wird das Differenzsignal 45 verstärkt. Alternativ kann eine Verstärkung auch an jeder anderen Stelle bei der Bestimmung der Zeitkonstante $T_{optimal}$ bzw. des Stellsignals 41 erfolgen. Beispielsweise könnte das Absolutwertsignal 48 verstärkt werden. Ebenso wäre es beispielsweise denkbar erst das von der Begrertzungseinheit 49 erzeugte 41 zu verstärken. In einem solchen Fall wäre diese Verstärkung bei der Begrenzung des Stellsignals 41 selbstverständlich zu berücksichtigen.

Eine Zeitkonstante $T_{PT1-Glied}$ für das $PT_1$-Glied einer als $PT_1$-Glied ausgebildeten Verzögerungseinheit 43 wird vorzugsweise gleich der maximalen Zeitkonstante des Glättungsfilters 32 gewählt:

$$T_{PT1-Glied} = T_{maximal}. \tag{Gl. 2}$$

Die einzelnen beschriebenen Elemente der Vorrichtung 31 zum Filtern werden vorzugsweise als fest verdrahtete Schaltung realisiert. Dem Fachmann ist die Umsetzung der einzelnen beschriebenen Elemente in Schaltkreise bekannt. Einzelne oder mehrere Teile der Schaltung oder sogar die ganze Schaltung können ebenfalls als digitale Schaltkreise ausgebildet werden.

Bezugszeichenliste

| | |
|---|---|
| 1 | Fahrzeug |
| 2 | elektromechanisches Lenksystem |
| 3 | Lenkelement |
| 4 | Sensor |
| 5 | Differenzierer |
| 6 | Vorrichtung zum Filtern |
| 7 | Steuer- und Regelvorrichtung |
| 8 | elektrisch betriebene Wirkeinrichtung |
| 9 | Lenkmechanik |
| 10 | Stellglied |

EP 1 783 459 B1

| 21a | ungefiltertes differenziertes Messsignal |
| 21b | schwach gefiltertes differenziertes Messsignal |
| 21c | stark gefiltertes differenziertes Messsignal |
| 22a-c | Rauschamplitude |
| 23a-c | dynamischer Bereich |
| 24a-c | statischer Bereich |
| 25a-c | Anstiegszeit |
| 31 | Vorrichtung zum Fütern |
| 32 | Glättungsfilter |
| 33 | Steuereinrichtung |
| 34 | ungefiltertes differenziertes Messsignal |
| 35 | gefiltertes differenziertes Messsignal |
| 36 | Integriereinheit |
| 37 | Ausgangssignal |
| 38 | weitere Differenzbildungseinheit |
| 39 | Ergebnissignal |
| 40 | Produktbildungseinheit |
| 41 | Stellsignal |
| 42 | Produktsignal |
| 43 | Verzögerungseinheit |
| 44 | Differenzbildungseinheit |
| 45 | Differenzsignal |
| 46 | Verstärker |
| 47 | Betragsbildungseinheit |
| 48 | Absolutwertsignal |
| 49 | Begrenzungseinheit |

**Patentansprüche**

1. Vorrichtung (6, 31) zum Filtern eines differenzierten Messsignals (21a, 34), insbesondere eines differenzierten Messsignals (21a, 34) eines Lenkelements (3), insbesondere eines Lenkrads, eines elektromechanischen Lenksystems (2), umfassend ein Glättungsfilter (32) zum Filtern des differenzierten Messsignals (21a, 34), **dadurch gekennzeichnet, dass** das Glättungsfilter (32) ein adaptives Filter ist und mittels einer Steuereinrichtung (33) eine Zeitkonstante $T_{optimal}$ des Glättungsfilters (32) adaptiv an eine Dynamik des differenzierten Messsignals (21a, 34) angepasst wird, wobei die Dynamik des differenzierten Messsignals (21a, 34) durch ein Verhältnis einer Amplitudenänderung des differenzierten Messsignals (21a, 34) zu einer Rauschamplitude (22a) des differenzierten Messsignals (21a, 34) bestimmt ist.

2. Vorrichtung (6, 31) nach Anspruch 1, **dadurch gekennzeichnet, dass** das Glättungsfilter (32) ein Tiefpassfilter ist.

3. Vorrichtung (6, 31) nach Anspruch 1 oder 2, **dadurch gekennzeichnet, dass** mittels der Steuereinrichtung (33) ein Differenzsignal (45) aus dem differenzierten Messsignal (21a, 34) und einem aus dem differenzierten Messsignal (21a, 34) abgeleiteten Messsignal, das zumindest eine zeitliche Verzögerung gegenüber dem differenzierten Messsignal (21a, 34) aufweist, bestimmbar ist, wobei das Differenzsignal (45) ein Maß für die Zeitkonstante $T_{optimal}$ angibt.

4. Vorrichtung (6, 31) nach einem der vorangehenden Ansprüche, **dadurch gekennzeichnet, dass** die Steuereinrichtung (33) ein $PT_1$-Glied zum Erzeugen des abgeleiteten Messsignals umfasst.

5. Vorrichtung (6, 31) nach einem der vorangehenden Ansprüche, **dadurch gekennzeichnet, dass** die Steuereinrichtung (33) eine Betragsbildungseinheit (47) zum Bilden eines Absolutwertsignals (48) aus dem Differenzsignal (45) umfasst, wobei das Absolutwertsignal (48) ein Maß für die Zeitkonstante $T_{optimal}$ ist.

6. Vorrichtung (6, 31) nach einem der vorangehenden Ansprüche, **dadurch gekennzeichnet, dass** die Steuereinrichtung (33) eine Begrenzungseinheit (49) zum Überwachen, dass ein Wert der von der Steuereinrichtung (33) bestimmten Zeitkonstante $T_{optimal}$ zwischen einem Minimalwert der Zeitkonstante $T_{minimal}$ und einem Maximalwert der Zeitkonstante $T_{maximal}$ liegt, und gegebenenfalls zum Setzen des Wertes der bestimmte Zeitkonstante $T_{optimal}$

8

bei einem Unterschreiten des Minimalwerts $T_{minimal}$ auf den Minimalwert $T_{minimal}$ und bei einem Überschreiten des Maximalwerts $T_{maximal}$ auf den Maximalwert $T_{maximal}$ der Zeitkonstante umfasst.

7. Vorrichtung (6, 31) nach einem der vorangehenden Ansprüche, **dadurch gekennzeichnet, dass** die Steuereinrichtung (33) einen Verstärker (46) umfasst, mit dem das Differenzsignal (45), das Absolutwertsignal (48) oder das begrenzte Differenzsignal oder das begrenzte Absolutwertsignal verstärkbar sind.

8. Vorrichtung (6, 31) nach Anspruch 1, **dadurch gekennzeichnet, dass** eine Wert einer $PT_1$-Glied-Zeitkonstante $T_{PT1-Glied}$ des $PT_1$-Glieds dem Maximalwert der Zeitkonstante $T_{maximal}$ des Glättungsfilters (32) entspricht.

9. Vorrichtung (6, 31) nach einem der vorangehenden Ansprüche, **dadurch gekennzeichnet, dass** das Glättungsfilter (32) eine weitere Differenzbildungseinheit (38), eine Produktbildungseinheit (40) und eine Integriereinheit (36) umfasst, die gemeinsam einen Tiefpass erster Ordnung bilden, wobei von der Steuereinrichtung (33) die Zeitkonstante in Form eines erzeugten Stellsignals (41) lieferbar ist, das den Kehrwert der Zeitkonstante repräsentiert, und das Stellsignal (41) mit dem differenzierten Messsignal mittels der Produktbildungseinheit (40) multiplizierbar und anschließend mit der Integriereinheit (36) integrierbar ist, um ein gefiltertes differenziertes Messsignal (35) zu liefern, wobei das gefilterte differenzierte Messsignal (35) so zurückkoppelbar ist, dass es mittels der weiteren Differenzbildungseinheit (38) von dem differenzierten Messsignal (34) vor der Produktbildung mit dem Stellsignal (41) subtrahierbar ist.

10. Elektromechanisches Lenksystem (2) für ein Kraftfahrzeug (1), umfassend eine Vorrichtung (6, 31) zum Filtern nach einem der vorangehenden Ansprüche, wobei ein Messsignal einer physikalischen Messgröße, insbesondere einer Position, eines Lenkelements (3) erfassbar ist, dessen Differentiation das differenzierte Messsignal (21a, 34) liefert, wobei das gefilterte differenzierte Messsignal bei einer Steuerung einer Lenkmechanik (9) des Kraftfahrzeugs (1) verwendbar ist.

11. Elektromechanisches Lenksystem (2) nach Anspruch 10, **dadurch gekennzeichnet, dass** das Lenkelement (3) mit der Lenkmechanik (9) nicht mechanisch wirkend gekoppelt ist.

12. Verfahren zum Filtern eines differenzierten Messsignals (21a, 34), insbesondere eines differenzierten Messsignals (21a, 34) eines Lenkelements (3), insbesondere eines Lenkrads, eines elektromechanischen Lenksystems (2), umfassend einen Schritt eines Glättens des differenzierten Messsignals (21a, 34) mittels eines Glättungsfilters (32), **dadurch gekennzeichnet, dass**
mittels einer Steuereinrichtung (33) eine Zeitkonstante $T_{optimal}$ des Glättungsfilters (32) adaptiv an eine Dynamik des differenzierten Messsignals (21a, 34) angepasst wird, wobei die Dynamik des differenzierten Messsignals (21a, 34) anhand eines Verhältnisses einer Amplitudenänderung des differenzierten Messsignals (21a, 34) zu einer Rauschamplitude (22a) des differenzierten Messsignals (21a, 34) ermittelt wird.

13. Verfahren nach Anspruch 12, **dadurch gekennzeichnet, dass** mittels des Glättungsfilters (32) eine Tiefpassfilterung durchgeführt wird.

14. Verfahren nach Anspruch 12 oder 13, **dadurch gekennzeichnet, dass** mittels einer Steuereinrichtung (33) ein Differenzsignal (45) aus dem differenzierten Messsignal (21a, 34) und einem aus dem differenzierten Messsignal abgeleiteten Messsignal gebildet wird, wobei das abgeleiteten Messsignal vor dem Bilden des Differenzsignals zumindest zeitlich gegenüber dem differenzierten Messsignal (21a, 34) verzögert wird und wobei das Differenzsignal (45) ein Maß für die Zeitkonstante $T_{optimal}$ ist.

15. Verfahren nach einem der Ansprüche 12 bis 14, **dadurch gekennzeichnet, dass** das abgeleitete Messsignal mittels eines $PT_1$-Glieds erzeugt wird.

16. Verfahren nach einem der Ansprüche 12 bis 15, **dadurch gekennzeichnet, dass** aus dem Differenzsignal (45) ein Absolutwertsignal (48) gebildet wird, das ein Maß für die Zeitkonstante ist.

17. Verfahren nach einem der Ansprüche 12 bis 16, **dadurch gekennzeichnet, dass** ein Wert der bestimmten Zeitkonstante $T_{optimal}$ eingeschränkt wird, sodass der Wert der bestimmten Zeitkonstante $T_{optimal}$ zwischen einem Minimalwert der Zeitkonstante $T_{minimal}$ und einem Maximalwert der Zeitkonstante $T_{maximal}$ liegt, und gegebenenfalls bei einem Unterschreiten des Minimalwerts $T_{minimal}$ auf den Minimalwert $T_{minimal}$ und bei einem Überschreiten des Maximalwerts $T_{maximal}$ auf den Maximalwert $T_{maximal}$ der Zeitkonstante des Glättungsfilters (32) gesetzt wird.

**18.** Verfahren nach einem der Ansprüche 14 bis 17, **dadurch gekennzeichnet, dass** ein Wert einer $PT_1$-Glied-Zeitkonstante $T_{PT1-Glied}$ des $PT_1$-Glieds einem Maximalwert der Zeitkonstante $T_{maximal}$ des Glättungsfilters (32) entspricht.

**19.** Verfahren nach einem der Ansprüche 12 bis 18, **dadurch gekennzeichnet, dass** das Differenzsignal (45), das Absolutwertsignal (48) oder das begrenzte Differenzsignal oder das begrenzte Absolutwertsignal verstärkt werden.

**20.** Verfahren nach einem der Ansprüche 12 bis 19, **dadurch gekennzeichnet, dass** dem Glättungsfilter (32) von der Steuereinrichtung die Zeitkonstante $T_{optimal}$ in Form eines erzeugten Stellsignals (41) geliefert wird, das einen Kehrwert der Zeitkonstante repräsentiert, und das Stellsignal (41) mittels einer Produktbildungseinheit (40) mit dem differenzierten Messsignal multipliziert wird und anschließend ein so erhaltenes Produktsignal (42) mit einer Integriereinheit (36) integriert wird, um ein gefiltertes differenziertes Messsignal (35) zu liefern, wobei das gefilterte differenzierte Messsignal (35) so zurückgekoppelt wird, dass es mittels einer weiteren Differenzbildungseinheit (38) von dem differenzierten Messsignal (34) vor der Produktbildung mit dem Stellsignal (41) subtrahiert wird.

**21.** Verfahren zum Steuern einer Lenkmechanik (9) eines elektromechanischen Lenksystem (2) eines Kraftfahrzeugs (1) umfassend ein Verfahren nach einem der Ansprüche 12 bis 20 zum Filtern des differenzierten Messsignals (21a, 34), wobei ein Messsignal einer physikalischen Messgröße, insbesondere einer Position, eines Lenkelements (3) erfasst wird, wobei das Messsignal differenziert wird, um das differenzierte Messsignal (21a, 34) zu erhalten, und das gefilterte differenzierte Messsignal (35) beim Steuern der Lenkmechanik (9) verwendet wird.

**22.** Verfahren nach Anspruch 21, **dadurch gekennzeichnet, dass** das Lenkelement (3) mit der Lenkmechanik (9) nicht mechanisch wirkend gekoppelt ist.

**Claims**

**1.** Device (6, 31) for filtering a differentiated measuring signal (21a, 34), in particular a differentiated measuring signal (21a, 34) of a steering element (3), in particular of a steering wheel, of an electromechanical steering system (2), comprising a smoothing filter (32) for filtering the differentiated measuring signal (21a, 34),
**characterized in that**
the smoothing filter (32) is an adaptive filter, and a time constant $T_{optimum}$ of the smoothing filter (32) is adjusted adaptively to dynamics of the differentiated measuring signal (21a, 34) by means of a control apparatus(33), wherein the dynamics of the differentiated measuring signal (21a, 34) are determined by means of a ratio of a change in amplitude of the differentiated measuring signal (21a, 34) to a noise amplitude (22a) of the differentiated measuring signal (21a, 34).

**2.** Device (6, 31) according to Claim 1, **characterized in that** the smoothing filter (32) is a low-pass filter.

**3.** Device (6, 31) according to Claim 1 or 2, **characterized in that** a difference signal (45) can be determined by means of the control apparatus (33) from the differentiated measuring signal (21a, 34) and a measuring signal which is derived from the differentiated measuring signal (21a, 34) and has at least one temporal delay with respect to the differentiated measuring signal (21a, 34), wherein the difference signal (45) specifies a measure of the time constant $T_{optimum}$.

**4.** Device (6, 31) according to one of the preceding claims, **characterized in that** the control apparatus (33) comprises a $PT_1$ element for generating the derived measuring signal.

**5.** Device (6, 31) according to one of the preceding claims, **characterized in that** the control apparatus (33) comprises an absolute-value-forming unit (47) for forming an absolute value signal (48) from the difference signal (45), wherein the absolute value signal (48) is a measure of the time constant $T_{optimum}$.

**6.** Device (6, 31) according to one of the preceding claims, **characterized in that** the control apparatus (33) comprises a limiting unit (49) for monitoring that a value of the time constant $T_{optimum}$ determined by the control apparatus (33) is between a minimum value of the time constant $T_{minimum}$ and a maximum value of the time constant $T_{maximum}$ and, if appropriate, for setting the value of the determined time constant $T_{optimum}$ to the minimum value $T_{minimum}$ when the minimum value $T_{minimum}$ is undershot, and to the maximum value $T_{maximum}$ of the time constant when the maximum value $T_{maximum}$ is exceeded.

7.  Device (6, 31) according to one of the preceding claims, **characterized in that** the control apparatus (33) comprises an amplifier (46) with which the difference signal (45), the absolute value signal (48) or the limited difference signal or the limited absolute value signal can be amplified.

8.  Device (6, 31) according to Claim 1, **characterized in that** a value of a $PT_1$ element time constant $T_{PT1}$ element of the $PT_1$ element corresponds to the maximum value of the time constant $T_{maximum}$ of the smoothing filter (32).

9.  Device (6, 31) according to one of the preceding claims, **characterized in that** the smoothing filter (32) comprises a further difference-forming unit (38), a product-forming unit (40) and an integrating unit (36) which together form a first- order low-pass filter, wherein the control apparatus (33) can supply the time constant in the form of a generated actuating signal (41) which represents the reciprocal value of the time constant, and the actuating signal (41) can be multiplied by the differentiated measuring signal by means of the product-forming unit (40) and subsequently integrated with the integrating unit (36) in order to supply a filtered differentiated measuring signal (35), wherein the filtered differentiated measuring signal (35) can be fed back in such a way that it can be subtracted from the differentiated measuring signal (34) by means of the further difference-forming unit (38) before the product formation with the actuating signal (41).

10. Electromechanical steering system (2) for a motor vehicle (1), comprising a device (6, 31) for filtering according to one of the preceding claims, wherein a measuring signal of a physical measuring variable, in particular of a position, of a steering element (3), whose differentiation supplies the differentiated measuring signal (21a, 34), can be detected, wherein the filtered differentiated measuring signal can be used in controlling a steering mechanism (9) of the motor vehicle (1).

11. Electromechanical steering system (2) according to Claim 10, **characterized in that** the steering element (3) is not coupled to the steering mechanism (9) in a mechanically effective fashion.

12. Method for filtering a differentiated measuring signal (21a, 34), in particular a differentiated measuring signal (21a, 34) of a steering element (3), in particular of a steering wheel, of an electromechanical steering system (2), comprising a step of smoothing the differentiated measuring signal (21a, 34) by means of a smoothing filter (32),
    **characterized in that**
    a time constant $T_{optimum}$ of the smoothing filter (32) is adjusted adaptively to dynamics of the differentiated measuring signal (21a, 34) by means of a control apparatus (33), wherein the dynamics of the differentiated measuring signal (21a, 34) are ascertained on the basis of a ratio of a change in amplitude of the differentiated measuring signal (21a, 34) to a noise amplitude (22a) of the differentiated measuring signal (21a, 34).

13. Method according to Claim 12, **characterized in that** a low-pass filtering operation is carried out by means of the smoothing filter (32).

14. Method according to Claim 12 or 13, **characterized in that** a difference signal (45) is formed by means of a control apparatus (33) from the differentiated measuring signal (21a, 34) and a measuring signal which is derived from the differentiated measuring signal, wherein the derived measuring signal is delayed at least temporally with respect to the differentiated measuring signal (21a, 34) before the formation of the difference signal, and wherein the difference signal (45) is a measure of the time constant $T_{optimum}$

15. Method according to one of Claims 12 to 14, **characterized in that** the derived measuring signal is generated by means of a $PT_1$ element.

16. Method according to one of Claims 12 to 15, **characterized in that** an absolute value signal (48) which is a measure of the time constant is formed from the difference signal (45).

17. Method according to one of Claims 12 to 16, **characterized in that** a value of the determined time constant $T_{optimum}$ is limited, with the result that the value of the determined time constant $T_{optimum}$ is between a minimum value of the time constant $T_{minimum}$ and a maximum value of the time constant $T_{maximum}$, and if appropriate, when the minimum value $T_{minimum}$ is undershot the value of said time constant $T_{optimum}$ is set to the minimum value $T_{minimum}$ and when the maximum value $T_{maximum}$ is exceeded, the value of said time constant $T_{optimum}$ is set to the maximum value $T_{maximum}$ of the time constant of the smoothing filter (32).

18. Method according to one of Claims 14 to 17, **characterized in that** a value of a $PT_1$ element time constant $T_{PT1}$

element of the $PT_1$ element corresponds to a maximum value of the time constant $T_{maximum}$ of the smoothing filter (32).

19. Method according to one of Claims 12 to 18, **characterized in that** the difference signal (45), the absolute value signal (48) or the limited difference signal or the limited absolute value signal are amplified.

20. Method according to one of Claims 12 to 19, **characterized in that** the time constant $T_{optimum}$ is supplied in the form of a generated actuating signal (41) to the smoothing filter (32) by the control apparatus, said actuating signal (41) representing a reciprocal value of the time constant, and the actuating signal (41) being multiplied by the differentiated measuring signal by means of a product-forming unit (40), and subsequently a product signal (42) which is obtained in this way being integrated with an integrating unit (36) in order to supply a filtered differentiated measuring signal (35), wherein the filtered differentiated measuring signal (35) is fed back in such a way that it is subtracted from the differentiated measuring signal (34) by means of a further difference-forming unit (38) before the product formation with the actuating signal (41).

21. Method for controlling a steering mechanism (9) of an electromechanical steering system (2) of a motor vehicle (1) comprising a method according to one of Claims 12 to 20 for filtering the differentiated measuring signal (21a, 34), wherein a measuring signal of a physical measuring variable, in particular of a position, of a steering element (3) is detected, wherein the measuring signal is differentiated in order to obtain the differentiated measuring signal (21a, 34), and the filtered differentiated measuring signal (35) is used in controlling the steering mechanism (9).

22. Method according to Claim 21, **characterized in that** the steering element (3) is not coupled to the steering mechanism (9) in a mechanically effective fashion.


**Revendications**

1. Ensemble (6, 31) de filtrage d'un signal différentiel de mesure (21a, 34), en particulier d'un signal différentiel de mesure (21a, 34) d'un élément de braquage (3) et notamment du volant d'un système électromécanique de braquage (2), l'ensemble présentant un filtre de lissage (32) qui filtre le signal différentiel de mesure (21a, 34),
**caractérisé en ce que**
le filtre de lissage (32) est un filtre adaptatif, **en ce qu'**une constante de temps $T_{optimal}$ du filtre de lissage (32) est adaptée de manière adaptative à la dynamique du signal différentiel de mesure (21a, 34) au moyen d'un dispositif de commande (33),
**en ce que** la dynamique du signal différentiel de mesure (21a, 34) est définie par le rapport entre une modification d'amplitude du signal différentiel de mesure (21a, 34) et l'amplitude (22a) du bruit du signal différentiel de mesure (21a, 34).

2. Ensemble (6, 31) selon la revendication 1, **caractérisé en ce que** le filtre de lissage (32) est un filtre passe-bas.

3. Ensemble (6, 31) selon les revendications 1 ou 2, **caractérisé en ce que** le dispositif de commande (33) permet de définir à partir du signal différentiel de mesure (21a, 34) et d'un signal de mesure dérivé du signal différentiel de mesure (21a, 34) un signal de différence (45) qui présente au moins un retard temporel par rapport au signal différentiel de mesure (21a, 34), le signal de différence (45) indiquant une mesure de la constante de temps $T_{optimal}$.

4. Ensemble (6, 31) selon l'une des revendications précédentes, **caractérisé en ce que** le dispositif de commande (33) comporte un organe $PT_1$ qui forme le signal de mesure dérivé.

5. Ensemble (6, 31) selon l'une des revendications précédentes, **caractérisé en ce que** le dispositif de commande (33) comporte une unité (47) de formation de valeur qui forme un signal (48) de valeur absolue à partir du signal de différence (45), le signal (48) de valeur absolue étant une mesure de la constante de temps $T_{optimal}$

6. Ensemble (6, 31) selon l'une des revendications précédentes, **caractérisé en ce que** le dispositif de commande (33) comprend une unité de limitation (49) qui surveille si une valeur de la constante de temps $T_{optimal}$ définie par le dispositif de commande (33) est située entre une valeur minimale de la constante de temps $T_{minimal}$ et une valeur maximale de la constante de temps $T_{maximal}$ et qui fixe éventuellement la valeur de la constante de temps $T_{optimal}$ ainsi définie à la valeur minimale $T_{minimal}$ lorsque la valeur minimale $T_{minimal}$ n'est pas atteinte et à la valeur maximale $T_{maximal}$ de la constante de temps si la valeur maximale $T_{maximal}$ est dépassée.

**7.** Ensemble (6, 31) selon l'une des revendications précédentes, **caractérisé en ce que** le dispositif de commande (33) comprend un amplificateur (46) par lequel le signal de différence (45), le signal (48) de valeur absolue ou le signal de différence limité ou le signal de valeur absolue limité peuvent être amplifiés.

**8.** Ensemble (6, 31) selon la revendication 1, **caractérisé en ce qu'**une valeur d'une constante de temps $T_{organe}$ $PT_1$ de l'organe $PT_1$ correspond à la valeur maximale de la constante de temps $T_{maximal}$ du filtre de lissage (32).

**9.** Ensemble (6, 31) selon l'une des revendications précédentes, **caractérisé en ce que** le filtre de lissage (32) comporte une autre unité (38) de formation de différence, une unité (40) de formation de produit et une unité d'intégration (36) qui forment ensemble un filtre passe-bas de premier ordre, la constante de temps pouvant être délivrée par le dispositif de commande (33) sous la forme d'un signal de réglage (41) qui représente la valeur inverse de la constante de temps, le signal de réglage (41) pouvant être multiplié par le signal différentiel de mesure au moyen de l'unité (40) de formation de produit et ensuite intégré au moyen de l'unité d'intégration (36) pour délivrer un signal différentiel de mesure filtré (35), le signal différentiel de mesure filtré (35) pouvant être ré-accouplé de manière à pouvoir être soustrait du signal différentiel de mesure (34) au moyen de l'autre unité (38) de formation de différence avant la formation du produit avec le signal de réglage (41).

**10.** Système électromagnétique de braquage (2) pour véhicule automobile (1), comprenant un ensemble (6, 31) de filtrage selon l'une des revendications précédentes, et dans lequel un signal de mesure d'une grandeur physique de mesure, en particulier d'une position d'un élément de braquage (3) peut être saisi, dont la formation de la différentielle fournit le signal différentiel de mesure (21a, 34), le signal différentiel de mesure filtré pouvant être utilisé lors de la commande de mécanisme de braquage (9) du véhicule automobile (1).

**11.** Système électromagnétique de braquage (2) selon la revendication 10, **caractérisé en ce que** l'élément de braquage (3) n'est pas accouplé de manière mécaniquement active au mécanisme de braquage (9).

**12.** Procédé de filtrage d'un signal différentiel de mesure (21a, 34), en particulier d'un signal différentiel de mesure (21a, 34) d'un élément de braquage (3) et notamment du volant d'un système électromécanique de braquage (2), l'ensemble comprenant une étape de lissage du signal différentiel de mesure (21a, 34) au moyen d'un filtre de lissage (32), **caractérisé en ce que**
au moyen d'un dispositif de commande (33), une constante de temps $T_{optimal}$ du filtre de lissage (32) est adaptée de manière adaptative à la dynamique du signal différentiel de mesure (21a, 34) et
**en ce que** la dynamique du signal différentiel de mesure (21a, 34) est déterminée à l'aide du rapport entre une modification d'amplitude du signal différentiel de mesure (21a, 34) et l'amplitude (22a) du bruit du signal différentiel de mesure (21a, 34).

**13.** Procédé selon la revendication 12, **caractérisé en ce qu'**un filtrage passe-bas est réalisé au moyen du filtre de lissage (32).

**14.** Procédé selon les revendications 12 ou 13, caractérisé en ce le dispositif de commande (33) permet de définir un signal de différence (45) à partir du signal différentiel de mesure (21a, 34) et d'un signal de mesure dérivé du signal différentiel de mesure, le signal de mesure dérivé étant retardé au moins temporellement par rapport au signal différentiel de mesure (21a, 34) avant la formation du signal de différence et le signal de différence (45) indiquant une mesure de la constante de temps $T_{optimal}$.

**15.** Procédé selon l'une des revendications 12 à 14, **caractérisé en ce que** le signal de mesure dérivé est formé au moyen d'un organe $PT_1$.

**16.** Procédé selon l'une des revendications 12 à 15, **caractérisé en ce qu'**un signal (48) de valeur absolue qui constitue une mesure de la constante de temps est formé à partir du signal de différence (45).

**17.** Procédé selon l'une des revendications 12 à 16, **caractérisé en ce qu'**une valeur de la constante de temps $T_{optimal}$ définie est limitée de telle sorte que la valeur de la constante de temps $T_{optimal}$ définie soit située entre une valeur minimale de la constante de temps $T_{minimal}$ et une valeur maximale de la constante de temps $T_{maximal}$ et qu'éventuellement la valeur de la constante de temps $T_{optimal}$ ainsi définie soit mise à la valeur minimale $T_{minimal}$ lorsque la valeur minimale $T_{minimal}$ n'est pas atteinte et à la valeur maximale $T_{maximal}$ de la constante de temps si la valeur maximale $T_{maximal}$ est dépassée.

**18.** Procédé selon l'une des revendications 14 à 17, **caractérisé en ce qu'**une valeur d'une constante de temps $T_{organe}$ PT1 de l'organe $PT_1$ correspond à la valeur maximale de la constante de temps $T_{maximal}$ du filtre de lissage (32).

**19.** Procédé selon l'une des revendications 12 à 18, **caractérisé en ce que** le signal de différence (45), le signal (48) de valeur absolue, le signal différentiel limité ou le signal de valeur absolue limité sont amplifiés.

**20.** Procédé selon l'une des revendications 12 à 19, **caractérisé en ce que** la constante de temps $T_{optimal}$ est délivrée par le dispositif de commande au filtre de lissage (32) sous la forme d'un signal de réglage (41) qui représente une valeur inverse de la constante de temps, le signal de réglage (41) étant multiplié par le signal différentiel de mesure au moyen d'une unité (40) de formation de produit et un signal de produit (42) ainsi obtenu est ensuite intégré avec une unité d'intégration (36) pour délivrer un signal différentiel de mesure filtré (35), le signal différentiel de mesure filtré (35) étant ré-accouplé de manière à pouvoir être soustrait du signal différentiel de mesure (34) au moyen de l'autre unité (38) de formation de différence avant la formation du produit avec le signal de réglage (41).

**21.** Procédé de commande du mécanisme de braquage (9) d'un système électromécanique de braquage (2) d'un véhicule automobile (1), comprenant un procédé selon l'une des revendications 12 à 20 de filtrage du signal différentiel de mesure (21a, 34), dans lequel est saisi un signal de mesure d'une grandeur physique de mesure, en particulier d'une position d'un élément de braquage (3), dont la formation de la différentielle fournit le signal différentiel de mesure (21a, 34), le signal différentiel de mesure filtré (35) étant utilisé lors de la commande de mécanisme de braquage (9).

**22.** Procédé selon la revendication 21, **caractérisé en ce que** l'élément de braquage (3) n'est pas raccordé de manière mécaniquement active au mécanisme de braquage (9).

FIG. 1

FIG. 2a

FIG. 2b

FIG. 2c

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004009815 A1
- DE 10209610 A1
- DE 4445561 A1